# EUROPÄISCHE PATENTSCHRIFT

(11) **EP 2 085 678 B1**
(45) Veröffentlichungstag und Bekanntmachung des Hinweises auf die Patenterteilung: **13.04.2011**
(21) Anmeldenummer: 09151296.2
(22) Anmeldetag: 26.01.2009
(51) Int. Cl.: B32B 5/22, F16L 59/02

(54) **Dämmstoffmatte**
Insulation mat
Matelas à isolation acoustique et thermique

(30) Priorität: 30.01.2008 DE 202008001296 U
(43) Veröffentlichungstag der Anmeldung: 05.08.2009
(73) Patentinhaber: Bohle Isoliertechnik GmbH, 51645 Gummersbach (DE)
(72) Erfinder: Rüssel, Ralf-Theodor, 50259 Pulheim (DE)
(74) Vertreter: von Kreisler Selting Werner

(56) Entgegenhaltungen:
- WO-A-99/00303
- FR-A- 2 742 842
- GB-A- 2 364 762
- US-A1- 2002 187 699
- US-A1- 2003 145 773
- GOLDSTEIN H ET AL: "INSULATION BLANKETS FOR HIGH-TEMPERATURE USE; LIGHTWEIGHT, FLEXIBLE MATERIAL RESISTS INTENSE HEAT" NTIS TECH NOTES, US DEPARTMENT OF COMMERCE. SPRINGFIELD, VA, US, Nr. 5, PART C, 1. Mai 1986 (1986-05-01), Seite 536, XP002010132 ISSN: 0889-8464

## Beschreibung

Die Erfindung betrifft eine Dämmstoffmatte zur Schall- und/oder Wärmedämmung von Maschinenteilen oder Abgasrohren sowie eine aus diesen Dämmstoffmatten bestehende Vorrichtung zur Schall- und/oder Wärmedämmung.

Nach den im Stand der Technik üblichen Verfahren zur Schall- und/oder Wärmeisolation von (Abgas-) Rohren werden die betreffenden Abschnitte zunächst mit Isoliermatten ummantelt. Die so angebrachte Isolierschicht wird anschließend zum weiteren Schutz gegen äußere (zum Beispiel Witterungs-) Einflüsse noch zusätzlich von einer Schutzhülle eingefasst.

Ein typisches Beispiel in diesem Zusammenhang ist das von der Aspen Aerogels, Inc. hergestellte Pyrogel^{®}, welches in Form flexibler Matten vertrieben wird (vgl. dazu US 6,068,882 A).

Dieser Aufbau birgt trotz seines hohen Isoliervermögens den Nachteil, dass der Aufwand bei einem vorzunehmenden Ersatz der Isolierung (angezeigt zum Beispiel aufgrund einer andauernden thermischen Belastung der Isolierung oder ihrer Beschädigung von außen) oft unverhältnismäßig groß ist, da meist nur ein kleiner Teil der (großflächigen) Isolierung betroffen ist.

US 2002/0187699 A1 **beschreibt ein Dämmmaterial mit einer besonders geringen Wärmeleitfähigkeit im Vakuum und hoher Flexibilität.**

GB 2 364 762 A **betrifft die Abschirmung von einer Wellpappenmaschine produzierten Hitze. Beschrieben wird ein sandwichartiger Aufbau, in dem die äußeren Schichten mit Aluminium beschichtet sind.**

**Eine Wärmedämmung ist auch aus** FR 2 742 842 A **bekannt. Faserdecken aus keramischen Fasern werden mit einem hitzebeständigen Faden miteinander verbunden.**

US 2003/0145773 A1 **betrifft eine Wärmedämmung, wie sie bei hohen Temperaturen für Fahrzeuge in der Luft- und Raumfahrttechnik verwendet wird. Eine entsprechende Isoliermatte wird dadurch erhalten, dass ein zu Beginn eher festes Wattematerial mit Oberflächenschichten versehen wird.**

**Eine leichte, flexible Isoliermatte ist auch aus "**NASA Tech. Brief Insulation Blanket for High-Temp. Use" (2301, N.T. I. S. Technical Notes, (1986), May, No. 5, Part C, Springfield, Virginia, USA**) bekannt. Die Matte besteht aus einer äußeren Decke aus Siliziumdioxid, die innere Decke aus Siliziumoxid oder reinem Filz aus Quarzglas, welche mit Fäden aus Quarzglas miteinander vernäht werden.**

WO 99/00303 A1 **betrifft eine schnell ein- und ausbaubare Wärmeisolierungsdecke für Raumfahrzeuge. Eine solche Wärmeisolierdecke umfasst eine Watteschicht umgebende Abdeckung sowie einen steifen Rahmen und Befestigungsmittel.**

Ziel der vorliegenden Erfindung ist es daher, einen Aufbau zur Schall- und/oder Wärmeisolation von unter anderem Abgasrohren bereitzustellen, der nicht nur ein hohes Isolationsvermögen aufweist, sondern darüber hinaus auch in einfacher Weise teilweise ersetzt werden kann, also leicht montierbar und demontierbar ist.

In einer ersten Ausführungsform wird die der vorliegenden Erfindung zugrundeliegende Aufgabe gelöst durch eine Dämmstoffmatte (1a,b,c) zur Schall- und/oder Wärmedämmung von Maschinenteilen oder Abgasrohren mit mindestens einer Dämmstoffschicht (2), mindestens einer **mit der** Dämmstoffschicht (2) in **Kontakt befindlichen** äußeren Hülle (3) und mindestens einer mit der Dämmstoffschicht (2) in Kontakt befindlichen inneren Hülle (4), welche dadurch gekennzeichnet ist, **dass die Dämmstoffschicht eine Aerogelmatte umfasst, und** dass mindestens eine äußere (3) mit mindestens einer inneren Hülle (4) vernäht ist. Die Vernähung der äußeren (3) und der inneren Hüllen (4) schließt dabei in dieser Ausführungsform die zwischen ihnen befindliche Dämmstoffmatte (2) nicht mit ein.

Ebenso ist es denkbar, dass bei der Dämmstoffmatte (1a,b,c) mindestens eine äußere (3) und/oder mindestens eine innere Hülle (4) mit der Dämmstoffschicht (2) vernäht ist. Eine solche, auch die Dämmstoffschicht (2) involvierende Naht, ermöglicht eine sehr einfache Formgebung bei der resultierenden Dämmstoffmatte (1a,b,c) - sowohl in einer permanenten als auch in einer temporären Art und Weise. Als Beispiel für eine permanente Formgebung können Schalen aus Dämmstoffmatten genannt werden, deren Durchmesser zum Beispiel an den des zu isolierenden Maschinenteils oder Abgasrohrs angepasst sein kann. Eine temporäre Formgebung kann in Form von Soll-Knickstellen gegeben sein, an welchen die Dämmstoffmatte (1a,b,c) leichter knickbar ist und dadurch an bestimmten Stellen leichter und passgenauer um das zu isolierende Maschinenteil oder Abgasrohr herumgelegt werden kann.

Überraschenderweise wird dabei die Dämmwirkung der erfindungsgemäßen Dämmstoffmatten (1a,b,c) durch die Anwesenheit von Nähten (8) nicht negativ beeinträchtigt.

Die Dämmstoffschicht (2) ist dabei eine schall- und/oder wärmedämmende Schicht, die nur eine geringe Schall- bzw. Wärmeleitung zulässt. Sie weist in aller Regel eine geringe Dichte (hohe Porosität) auf und besteht im Sinne der vorliegenden Erfindung vorzugsweise aus einem Material, welches über längere Zeiträume hinweg stabil gegenüber höheren Temperaturen ist. Bevorzugt handelt es sich bei der Dämmstoffschicht (2) um Silica-Aerogelmatten (zum Beispiel die Silica-Aerogelmatte Pyrogel^{®} 6670X der Aspen Aerogels, Inc.). Im Falle von Aerogelmatten sind diese bevorzugt mit mindestens einer äußeren (3) und/oder mindestens einer inneren Hülle (4) vernäht.

Unter einer Hülle ist in diesem Zusammenhang allgemein ein aus Garn(en) oder Zwirn(en) hergestelltes Gestrick, Gewebe, Gelege oder Gewirk zu verstehen. Im Sinne der vorliegenden Erfindung sind neben einlagigen Hüllen jeweils auch mehrlagige möglich, wobei das Material zusätzlicher Hüllen bevorzugt so ausgewählt wird, dass es einen zusätzlichen Beitrag zur Dämmwirkung der Dämmstoffmatte (2) leistet.

Der Zusatz "äußere" bzw. "innere" kennzeichnet dabei die Lage der Hülle in Bezug auf das zu isolierende Abgasrohr bzw. Maschinenteil: Die äußere bzw. innere Hülle befindet sich dabei auf der Seite der Dämmstoffschicht (2) und/oder befindet sich damit in Kontakt, welche dem zu isolierenden Abgasrohr bzw. Maschinenteil abgewandt bzw. zugewandt ist.

Die äußere Hülle (3) ist bevorzugt ein feuchtigkeitsdichtes Gewebe aus Glas- oder Silikatfasern, die zu diesem Zweck in der Regel beschichtet sind. Als Beschichtungen sind hier zum Beispiel eine Aluminiumpartikel enthaltende Polyurethanbeschichtung (zum Beispiel das Produkt KlevoGlass^{®} 2002-2 A der Klevers GmbH & Co. KG), eine Silikon-Beschichtung (zum Beispiel das Produkt 332/8 der Klevers GmbH & Co. KG), eine Folienbeschichtung enthaltend Aluminium und Polyethylen (zum Beispiel das Produkt 332-1-AL der Alpha Associates, Inc.) oder eine Teflonbeschichtung (zum Beispiel das Produkt FCF-1800 der Alpha Associates, Inc.) zu nennen. Durch die wasserabweisenden Eigenschaften dieser äußeren Hülle (3) wird ein Feuchtigkeits- und/oder Schmutzdurchtritt hin zum ummantelten Maschinenteil bzw. Abgasrohr und damit ihre Korrosion weitgehend vermieden. Schmutz meint in diesem Zusammenhang nicht nur zum Beispiel Staubpartikel sondern insbesondere auch brennbare Flüssigkeiten wie zum Beispiel Öle. Durch geeignete Bestandteile der äußeren Hülle wie zum Beispiel eine Metallfolie wird eine zusätzliche Wärmeisolation durch eine Reflexion der vom ummantelten Maschinenteil bzw. Abgasrohr abgestrahlten Wärmeenergie erreicht. Auch kann die äußere Hülle in Form einer Masseschicht besonders schwer ausgebildet sein, um eine zusätzliche Schalldämpfung zu erzielen. Die äußere Hülle (3) schützt die unter ihr liegende/n Dämmstoffschicht/en (2) vor mechanischer Einwirkung und trägt zu einer leichteren Reinigung des Dämmsystems bei.

Die innere Hülle (4) ist bevorzugt ein hochtemperaturbeständiges Gewebe aus veredelten oder verstärkten Glas- oder Silikatfasern. Als Veredelungs- bzw. Verstärkungsmittel können übliche zur Ausrüstung verwendete Schichten, Schmälzen und/oder Haftmittel verwendet werden, wie zum Beispiel Silikone oder Kunststoffe wie Polystyrol oder Polyurethane. Das verstärkte Glasfasertuch KlevoGlass^{®} 2002 V4A-1 A, das veredelte Glasfasertuch KlevoGlass^{®} 630-2 A HT oder das Silikatfasertuch KlevoSil^{®} 1100-1 A (alle von der Klevers GmbH & Co. KG) sind hier als typische Beispiele veredelter oder verstärkter Fasern zu nennen.

Durch die Vernähung mindestens einer äußeren (3) mit mindestens einer inneren Hülle (4) wird eine Dämmstoffmatte (1a,b,c) erhalten, welche sehr leicht montierbar und demontierbar ist. Insbesondere entfällt hier ein separates Aufbringen einer zusätzlichen äußeren Hülle (3), wie dies im Stand der Technik beschrieben ist, da diese schon in der Dämmstoffmatte (1a,b,c) integriert ist (gleiches gilt für die innere Hülle (4)). Durch entsprechend konfektionierte Dämmstoffmatten (1a,b,c) lässt sich entsprechend ein flexibler, das heißt insbesondere teilweise ersetzbarer, Isolationsaufbau bewerkstelligen.

Ein solcher Aufbau erweist sich insbesondere bei einer häufigen (De-) Montage solcher Dämmstoffmatten (1a,b,c) von Vorteil,
welche Dämmstoffschichten (2) umfassen, die für den Fall des Entweichens entsprechender Fasern in die Raumluft ein arbeitstechnisches Risiko darstellen. Durch die häufige (De-) Montage solcher Dämmstoffmatten (1a,b,c) unterliegen diese einer höheren mechanischen Beanspruchung, womit die Wahrscheinlichkeit einer Faserfreisetzung entsprechend steigt. Genau dies wird aber durch die äußere (3) und innere Hülle (4) vermieden.

Bevorzugt weisen die erfindungsgemäßen Dämmstoffmatten (1a,b,c) Verbindungs- und/oder Befestigungselemente auf. Typische Beispiele in diesem Zusammenhang sind VA-Drahthaken, sogenannte Turbinenhaken, Metalldruckknöpfe, Drehverschlüsse (Ösen und Wirbel), Schnallenbandverschlüsse mit Klemmschnallen oder Klettbänder.

Durch diese Verbindungs- bzw. Befestigungselemente kann zum Beispiel das eine Ende einer um ein zu isolierendes Maschinenteil gelegten Dämmstoffmatte (1a,b,c) mit dem anderen Ende, welches in der Regel bündig an das erste Ende anschließt, verbunden werden. Auch können mehrere Dämmstoffmatten (1a,b,c) untereinander verbunden werden, so dass im Endeffekt eine nahtlose Isolierung über das gesamte Maschinenteil hinweg resultiert. Auch ermöglicht dies einen leichteren Austausch nur einzelner Dämmstoffmatten (1a,b,c) aus einem Verbund.

Bevorzugt bestehen die äußere Hülle (3) und die innere Hülle (4) jeweils aus einem identischen Material. Dies stellt in der Regel nicht nur eine gewisse Kostenersparnis dar, sondern ermöglicht darüber hinaus auch eine sehr einfache Herstellung der erfindungsgemäßen Dämmstoffmatten (1a,b,c): So kann eine Hüllenlage (3, 4) um die Dämmstoffschicht (2) herumgelegt und die beiden Lagen (3, 4) mit dieser Dämmstoffschicht (2) verbunden sein.

Desweiteren kann es erwünscht sein, dass mindestens eine äußere Hülle (3) mit mindestens einer inneren Hülle (4) in den an die Dämmstoffschicht (2) angrenzenden Randbereichen (6), vernäht ist. Durch das Vernähen in den Randbereichen (6) erhält man besonders einfach handhabbare Kissen, bei denen die unter Umständen arbeitstechnisch bedenkliche Dämmstoffschicht (2) vollkommen ummantelt ist.

Die erfindungsgemäßen Dämmstoffmatten (1a,b,c) können darüber hinaus auch Löcher und/oder Ausnehmungen (7) aufweisen. So sind zum Beispiel zwei jeweils halbkreisförmige Ausnehmungen (7) in zwei Dämmstoffmatten (1a,b,c) denkbar, um eine möglichst genau abschließende Isolierung um ein seitlich ansetzendes kreisrundes Abgasrohr herum zu ermöglichen.

Die Naht/Nähte (8) der Dämmstoffmatte (1a,b,c) umfasst/umfassen bevorzugt hochtemperaturbeständige Nähgarne, insbesondere solche mit einer VA-Drahtseele. Diese werden zum Beispiel in einer mit Aramiden (zum Beispiel Keflar) oder Baumwolle ummantelten Form eingesetzt.

In einer weiteren Ausführungsform wird die der vorliegenden Erfindung zugrundeliegende Aufgabe gelöst durch eine Vorrichtung zur Schall- und/oder Wärmedämmung von Maschinenteilen oder Abgasrohren umfassend mindestens eine erfindungsgemäße Dämmstoffmatte (1a,b,c). Die Verbindung der einzelnen Dämmstoffmatten (1a,b,c) untereinander erfolgt bevorzugt über die oben schon beschriebenen Verbindungs- und/oder Befestigungselemente.

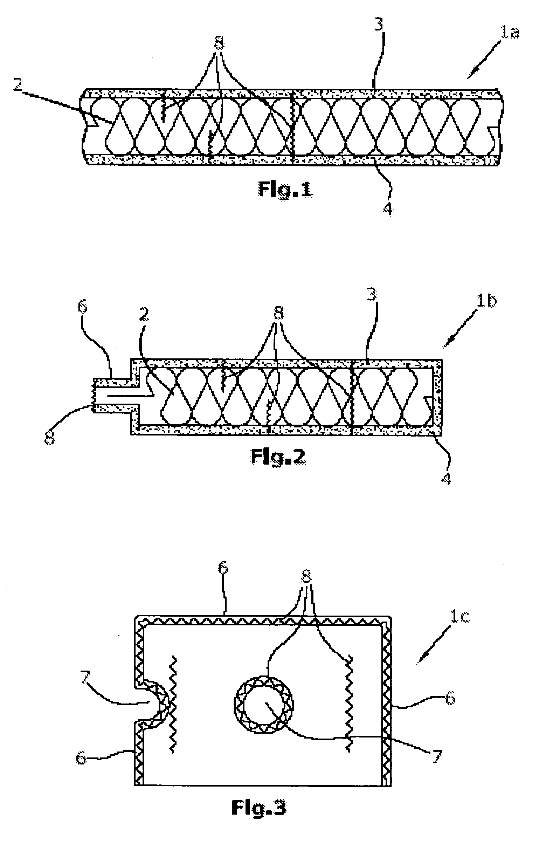

Die Fig. 1 bis 3 zeigen schematisch verschiedene Ausführungsformen der vorliegenden Erfindung, die den Umfang dieser in keiner Weise einschränken.

Fig. 1 zeigt eine Dämmstoffmatte (1a), bestehend aus einer äußeren Hülle (3), einer Dämmstoffschicht (2) und einer inneren Hülle (4). Die Nähte (8) verbinden dabei die äußere (3) und die innere Hülle (4) mit der Dämmstoffschicht (2). Hierbei kann es sich um zwei getrennte Nähte (8) oder um eine durchgehende Naht (8) - in der Figur 1 rechts dargestellt - handeln. Dass die Naht (8), wie hier dargestellt, die Dämmstoffschicht (2) mit einschließt ist aber gemäß der vorliegenden Erfindung nicht zwingend erforderlich.

Fig. 2 zeigt eine Dämmstoffmatte (1b), bei welcher die äußere Hülle (3) und die innere Hülle (4) aus einem identischen Material bestehen. Erhalten werden kann ein solches Kissen durch Umlegen der Hülle (3, 4) um die Dämmstoffschicht (2) herum und durch ein Vernähen der dann äußeren Hülle (3) mit der dann inneren Hülle (4) in den an die Dämmstoffschicht (2) angrenzenden Randbereichen (6).

In Fig. 3 ist eine Draufsicht 1c des in Fig. 3 gezeigten Kissens dargestellt. Dieses weist zusätzlich Löcher bzw. Ausnehmungen (7) auf.

## Patentansprüche

1. Dämmstoffmatte (1a,b,c) zur Schall- und/oder Wärmedämmung von Maschinenteilen oder Abgasrohren mit mindestens einer Dämmstoffschicht (2), mindestens einer **mit der** Dämmstoffschicht (2) in **Kontakt befindlichen** äußeren Hülle (3) und mindestens einer mit der Dämmstoffschicht (2) in Kontakt befindlichen inneren Hülle (4), **dadurch gekennzeichnet, dass die Dämmstoffschicht eine Aerogelmatte umfasst, und** dass mindestens eine äußere (3) mit mindestens einer inneren Hülle (4) vernäht ist.

2. Dämmstoffmatte (1a,b,c) nach Anspruch 1, **dadurch gekennzeichnet, dass** mindestens eine äußere (3) und/oder mindestens eine innere Hülle (4) mit der Dämmstoffschicht (2) vernäht ist.

3. Dämmstoffmatte (1a,b,c) nach einem der Ansprüche 1 oder 2, **dadurch gekennzeichnet, dass** sie Verbindungs- und/oder Befestigungselemente aufweist.

4. Dämmstoffmatte (1a,b,c) nach einem der Ansprüche 1 bis 3, **dadurch gekennzeichnet, dass** die äußere (3) und die innere Hülle (4) jeweils aus einem identischen Material bestehen.

5. Dämmstoffmatte (1a,b,c) nach einem der Ansprüche 1 bis 4, **dadurch gekennzeichnet, dass** mindestens eine äußere (3) mit mindestens einer inneren Hülle (4) in den an die Dämmstoffschicht (2) angrenzenden Randbereichen (6) vernäht ist.

6. Dämmstoffmatte (1a,b,c) nach einem der Ansprüche 1 bis 5, **dadurch gekennzeichnet, dass** sie Löcher und/oder Ausnehmungen (7) aufweist.

7. Dämmstoffmatte (1a,b,c) nach einem der Ansprüche 1 bis 6, **dadurch gekennzeichnet, dass es sich bei der Aerogelmatte um eine Silica-Aerogelmatte handelt.**

8. Dämmstoffmatte (1a,b,c) nach einem der Ansprüche 1 bis 7, **dadurch gekennzeichnet, dass** die äußere Hülle (3) ein feuchtigkeitsdichtes Gewebe aus Glas- oder Silikatfasern umfasst.

9. Dämmstoffmatte (1a,b,c) nach einem der Ansprüche 1 bis 8, **dadurch gekennzeichnet, dass** die innere Hülle (4) ein hochtemperaturbeständiges Gewebe aus Glas- oder Silikatfasern umfasst.

10. Dämmstoffmatte (1a,b,c) nach einem der Ansprüche 1 bis 9, **dadurch gekennzeichnet, dass** die Naht/Nähte (8) hochtemperaturbeständige Nähgarne, insbesondere solche mit einer VA-Drahtseele umfasst/umfassen.

11. **Verwendung einer Dämmstoffmatte (1a,b,c) nach einem der Ansprüche 1 is 9 in einer Vorrichtung zur Schall- und/oder Wärmedämmung von Maschinenteilen oder Abgasrohren.**

## Claims

1. An insulating mat (1a,b,c) for the sound and/or heat insulation of machine parts or exhaust pipes, comprising at least one insulation layer (2), at least one outer cover (3) in contact with said insulation layer (2), and at least one inner cover (4) in contact with said insulation layer (2), **characterized in that** said insulation layer comprises an aerogel mat, and that at least one outer cover (3) is sewn together with at least one inner cover (4).

2. The insulating mat (1a,b,c) according to claim 1, **characterized in that** at least one outer cover (3) and/or at least one inner cover (4) is sewn together with said insulation layer (2).

3. The insulating mat (1a,b,c) according to either of claims 1 or 2, **characterized by** comprising connecting and/or fastening elements.

4. The insulating mat (1a,b,c) according to any of claims 1 to 3, **characterized in that** said outer cover (3) and said inner cover (4) are made of identical materials.

5. The insulating mat (1a,b,c) according to any of claims 1 to 4, **characterized in that** at least one outer cover (3) is sewn together with at least one inner cover (4) in the marginal regions (6) adjacent to said insulation layer (2).

6. The insulating mat (1a,b,c) according to any of claims 1 to 5, **characterized by** comprising holes and/or recesses (7).

7. The insulating mat (1a,b,c) according to any of claims 1 to 6, **characterized in that** said aerogel mat is a silica aerogel mat.

8. The insulating mat (1a,b,c) according to any of claims 1 to 7, **characterized in that** said outer cover (3) comprises a moisture-proof fabric of glass or silicate fibers.

9. The insulating mat (1a,b,c) according to any of claims 1 to 8, **characterized in that** said inner cover (4) comprises a refractory fabric of glass or silicate fibers.

10. The insulating mat (1a,b,c) according to any of claims 1 to 9, **characterized in that** the seam(s) (8) comprise(s) refractory sewing threads, especially those having a stainless steel wire core.

11. Use of an insulating mat (1a,b,c) according to any of claims 1 to 9 in a device for the sound and/or heat insulation of machine parts or exhaust pipes.

## Revendications

1. Tapis isolant (1a,b,c) pour l'isolation acoustique et/ou thermique de pièces de machine ou de tuyaux d'échappement, comprenant au moins une couche isolante (2), au moins une enveloppe extérieure (3) en contact avec ladite couche isolante (2), et au moins une enveloppe intérieure (4) en contact avec ladite couche isolante (2), **caractérisé en ce que** ladite couche isolante comprend une plaque d'aérogel, et qu'au moins une enveloppe extérieure (3) est cousue avec au moins une enveloppe intérieure (4).

2. Tapis isolant (1a,b,c) selon la revendication 1, **caractérisé en ce qu'**au moins une enveloppe extérieure (3) et/ou au moins une enveloppe intérieure (4) est cousue avec ladite couche isolante (2).

3. Tapis isolant (1a,b,c) selon l'une quelconque des revendications 1 ou 2, **caractérisé en ce qu'**il comporte des éléments de raccord et/ou de fixation.

4. Tapis isolant (1a,b,c) selon l'une quelconque des revendications 1 à 3, **caractérisé en ce que** ladite enveloppe extérieure (3) et ladite enveloppe intérieure (4) sont constituées de matériaux identiques.

5. Tapis isolant (1a,b,c) selon l'une quelconque des revendications 1 à 4, **caractérisé en ce qu'**au moins une enveloppe extérieure (3) est cousue avec au moins une enveloppe intérieure (4) dans les régions marginales (6) adjacentes à ladite couche isolante (2).

6. Tapis isolant (1a,b,c) selon l'une quelconque des revendications 1 à 5, **caractérisé en ce qu'**elle comporte des trous et/ou des évidements (7).

7. Tapis isolant (1a,b,c) selon l'une quelconque des revendications 1 à 6, **caractérisé en ce que** ladite plaque d'aérogel est une plaque d'aérogel en silice.

8. Tapis isolant (1a,b,c) selon l'une quelconque des revendications 1 à 7, **caractérisé en ce que** ladite enveloppe extérieure (3) comporte un tissu en fibres de verre ou de silicate étanche à l'humidité.

9. Tapis isolant (1a,b,c) selon l'une quelconque des revendications 1 à 8, **caractérisé en ce que** ladite enveloppe intérieure (4) comporte un tissu en fibres de verre ou de silicate réfractaire.

10. Tapis isolant (1a,b,c) selon l'une quelconque des revendications 1 à 9, **caractérisé en ce que** la couture/les coutures (8) comporte/comportent des fils à coudre réfractaires, notamment ceux qui renferment une âme en acier inoxydable.

11. Utilisation d'un tapis isolant (1a,b,c) selon l'une quelconque des revendications 1 à 9 dans un dispositif pour l'isolation acoustique et/ou thermique de pièces de machine ou de tuyaux d'échappement.
